# EUROPEAN PATENT SPECIFICATION

(11) **EP 3 981 242 B1**
(45) Date of publication and mention of the grant of the patent: **29.01.2025**
(21) Application number: 21200441.0
(22) Date of filing: 01.10.2021
(51) Int. Cl.: A01D 34/416

(54) **TOOL FOR MECHANICAL WEEDING, SUCKERING, OR BRUSHING THE SOIL**
WERKZEUG ZUM MECHANISCHEN JÄTEN, ENTFERNEN VON TRIEBEN ODER BÜRSTEN DES BODENS
OUTIL DE DÉSHERBAGE MÉCANIQUE, D' ENLEVEMENT DE POUSSES, OU DE BROSSAGE DU SOL

(30) Priority: 06.10.2020 IT 202000023509
(43) Date of publication of application: 13.04.2022
(73) Proprietor: Rad-Hub S.r.l., 25015 Desenzano del Garda (BS) (IT)
(72) Inventor: ALBERTI, Davide Francesco, I-25010 Desenzano del Garda, BRESCIA (IT)
(74) Representative: Chimini, Francesco

(56) References cited:
- EP-B1- 3 318 116
- DE-A1- 102007 042 235
- US-A- 4 077 190
- US-B2- 7 743 511

## Description

This invention relates to a tool suitable for mechanically weeding, suckering, or brushing the soil beneath fruit or vegetable plants arranged in rows.

Sucker machines are already known which are equipped to cut or tear off the suckers growing at the base of the trunks of plants arranged in rows. Due to the diminishing use of chemical herbicides, such machines are also becoming increasingly popular for performing mechanical weed control.

In particular, a tool for mechanical weeding, suckering, or brushing of the soil underneath plants, comprising a shaft suitable to be put into rotation around its axis by a suckering machine, is already known. Longitudinal grooves are made in the shaft to form side openings in the side surface of the shaft. The longitudinal grooves removably house respective inserts that retain a plurality of consumable wires. The inserts are fully contained in their respective grooves, whereby the wires project radially from the side surface of the shaft by passing through their respective side openings to be fed in rotation by the rotation of the shaft.

An example of such a tool is described in EP3318116B1.

One of the limitations of these tools is that the shape and size of the wires are constrained by the shape and size of the longitudinal groove, and in particular the side opening.

Furthermore, since the inserts are completely housed in their respective longitudinal grooves, during use it is possible that dirt, dust, or other external elements can creep into the longitudinal grooves, damaging the inserts or otherwise making their handling much more difficult relative to the grooves, for example for their replacement or for replacement of the wires.

The object of this invention is to propose a tool for mechanically weeding, suckering, or brushing the soil, of the type mentioned above, but capable of resolving the drawbacks mentioned above.

Said object is achieved with a tool according to claim 1. The dependent claims describe preferred embodiments of the invention.

The features and advantages of the tool according to the invention will become apparent from the description below of its preferred embodiments, given by way of nonlimiting example, with reference to the attached figures, wherein:
- Fig. 1 is a perspective view of the tool for mechanical weeding, suckering or brushing according to the invention, in one embodiment;
- Fig. 2 is a side view of the tool in Fig. 1;
- Fig. 3 is a cross section of the tool along the line A-A of Fig. 2;
- Fig. 4 is an enlarged view of the detail B circled in Fig. 3;
- Fig. 5 is an end view of the tool from the previous figures;
- Fig. 6 is a longitudinal section of the tool along the line C-C of Fig. 5;
- Fig. 7 and 7a are two perspective views of only the retaining device of the tool from the previous figures;
- Fig. 8 is a perspective view of the tool for mechanical weeding, suckering, or brushing according to the invention, in another embodiment;
- Fig. 9 is a side view of the tool in Fig. 8;
- Fig. 10 is a cross section of the tool along the line A-A of Fig. 9;
- Fig. 11 is an enlarged view of the detail B circled in Fig. 10;
- Fig. 12 is an end view of the tool in Fig. 8;
- Fig. 13 is a longitudinal section of the tool along the line C-C of Fig. 12;
- Fig. 14 is a perspective view of only the retaining device of the tool from Fig. 8-13;
- Fig. 15 is a perspective view of the tool for mechanical weeding, suckering, or brushing according to the invention, in a further embodiment;
- Fig. 16 is a side view of the tool in Fig. 15;
- Fig. 17 is a cross section of the tool along the line A-A of Fig. 16;
- Fig. 18 is an enlarged view of the detail B circled in Fig. 17;
- Fig. 19 is an end view of the tool from Fig. 15-18;
- Fig. 20 is a longitudinal section of the tool along the line C-C of Fig. 19; and
- Fig. 21 and 21a are two perspective views of only the retaining device of the tool from Fig. 15-20.

In the following description, elements common to the various embodiments are indicated with the same reference numbers.

In said drawings, 1; 100; 1000 have been used to denote collectively a tool for mechanical weeding, scrubbing, or brushing according to the invention.

In a general embodiment, the tool 1; 100; 1000 comprises a shaft 10. The shaft 10 extends along a shaft axis X between a proximal end 10', suitable to be connected to a drive member 4 of a weeding machine so as to put the shaft in rotation around its own shaft axis X, and a distal end 10".

For example, the shaft 10 is formed from an extruded aluminum profile.

The shaft 10 defines a side surface of the shaft 14, i.e., a surface that extends around the shaft axis X.

At least one longitudinal groove 16 is formed in the shaft 10. For example, each longitudinal groove 16 extends over the full extension of the shaft 10. However, the term "longitudinal" indicates that the walls delimiting the groove extend parallel to the shaft axis X but does not necessarily imply that the groove must have a particular length relative to the length of the shaft or relative to its extension in an angular sense.

The tool 1; 100; 1000 comprises at least one retaining device 12; 112; 1012 partially and removably inserted into at least one longitudinal groove 16. In some embodiments described further hereinafter, the retaining device 12; 112; 1012 has a longitudinal extension, that is, it extends predominantly in the direction parallel to the shaft axis X. However, even for the retaining device, the term "longitudinal" does not necessarily imply that the device must have a particular length relative to the length of the shaft or relative to its extension in an angular sense. In other embodiments, the retaining device can also have a longitudinal extension that is less than its transverse, or circumferential, extension.

Each retaining device 12; 112; 1012 is configured to retain at least one tool 2; 200; 2000 whereby the tool projects radially from the shaft side surface 14 to be fed in rotation by the rotation of the shaft 10.

The tool 2; 200; 2000 can be a filament tool 2; 200, for example of the consumable type, or a whip tool 2000, that is, formed of two ribbon-shaped portions folded into a "U" shape.

Each retaining device 12; 112; 1012 has a device body 12'; 112'; 1012' that forms at least one shaft connecting portion 12a; 112a; 1012a and a tool connecting portion 12b; 112b; 1012b.

Each shaft connecting portion 12a; 112a; 1012a is removably blocked within at least one longitudinal groove 16.

The tool connecting portion 12b; 112b; 1012b extends outwardly from the at least one longitudinal groove 16 and so as to partially overlap the shaft side surface 14.

Each tool 2; 200; 2000 is retained between the tool connecting portion 12b; 112b; 1012b and the shaft side surface 14.

In other words, each tool 2; 200; 2000, when connected to a respective retaining device 12; 112; 1012 and when said retaining device is installed in the configuration of use on the shaft 10, is completely outside the at least one longitudinal groove 16.

More specifically, in one embodiment, the tool connecting portion 12b; 112b; 1012b forms at least one tool housing 18; 118; 1018 suitable to receive a proximal "U"-shaped portion 2'; 200'; 2000' of the tool 2; 200; 2000.

In one embodiment, the tool housing 18; 118; 1018 is configured whereby the proximal portion 2'; 200'; 2000' of the tool is retained by positive and/or force coupling between the tool connecting portion 12b; 112b; 1012b and the shaft side surface 14.

In one embodiment, moreover, the tool connecting portion 12b; 112b; 1012b completely encompasses the proximal portion 2'; 200'; 2000' of the tool, except for the side that adheres to or faces the shaft side surface 14, so as to prevent the entry of external agents, e.g., soil, dust, dirt, etc., into the tool housing 18; 118; 1018.

In other words, the tool connecting portion 12b; 112b; 1012b is configured to adhere to the shaft side wall 14 around the proximal portion 2'; 200'; 2000' of the tool.

In one embodiment, the shaft connecting portion 12a; 112a; 1012a and the tool connecting portion 12b; 112b; 1012b extend longitudinally along the length of the respective retaining device.

Preferably, moreover, the shaft connecting portion 12a; 112a; 1012a and the tool connecting portion 12b; 112b; 1012b are formed in one piece with the device body 12'; 112'; 1012'.

In an embodiment illustrated in the figures, each longitudinal groove 16 forms at least one undercut 16'. The retaining device 12; 112; 1012 is constrained radially to the shaft by the engagement of the shaft connecting portion 12a; 112a; 1012a with the undercut 16' .

For example, each longitudinal groove 16 has an inverted "T", or dovetail shape.

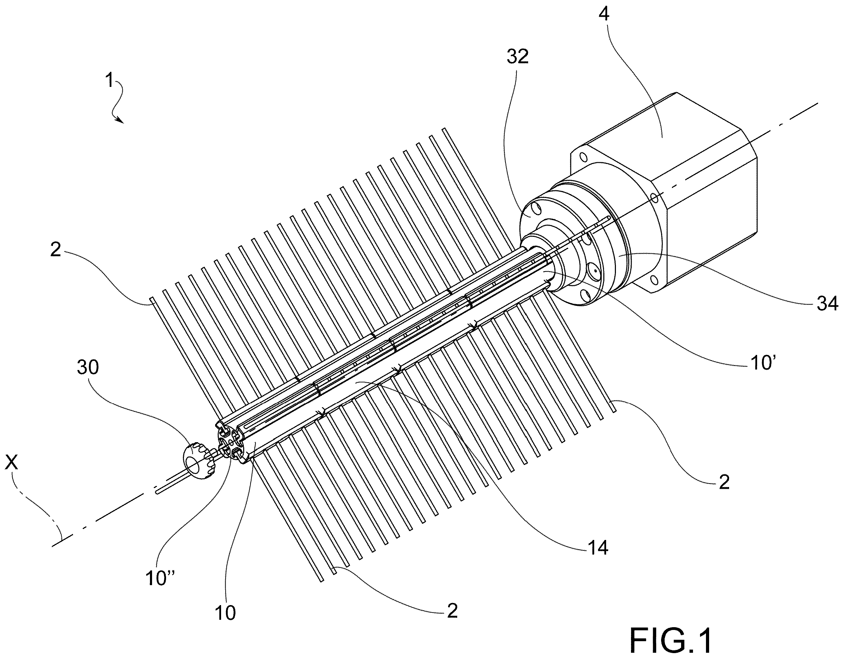

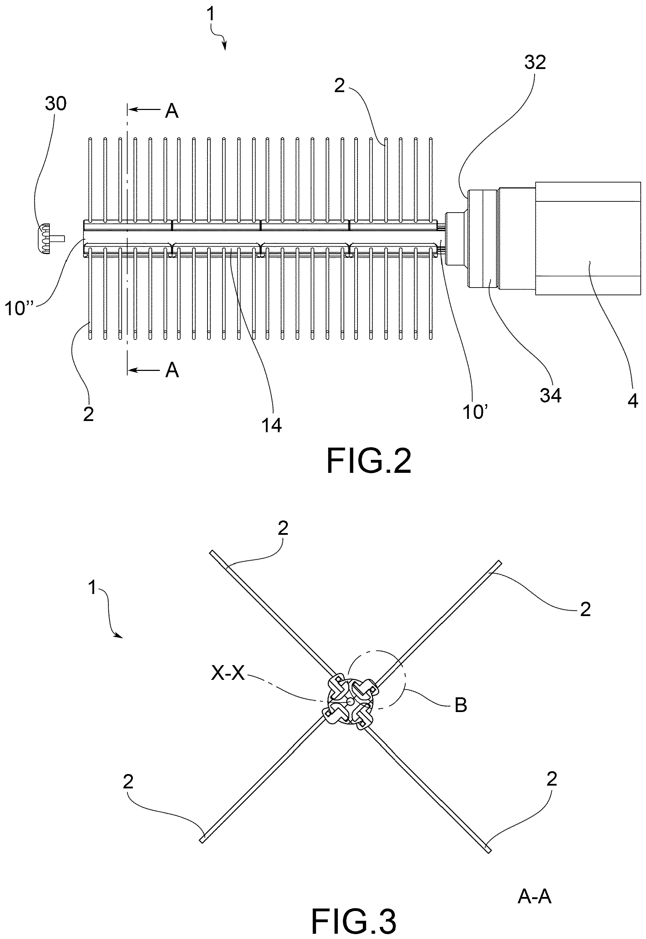

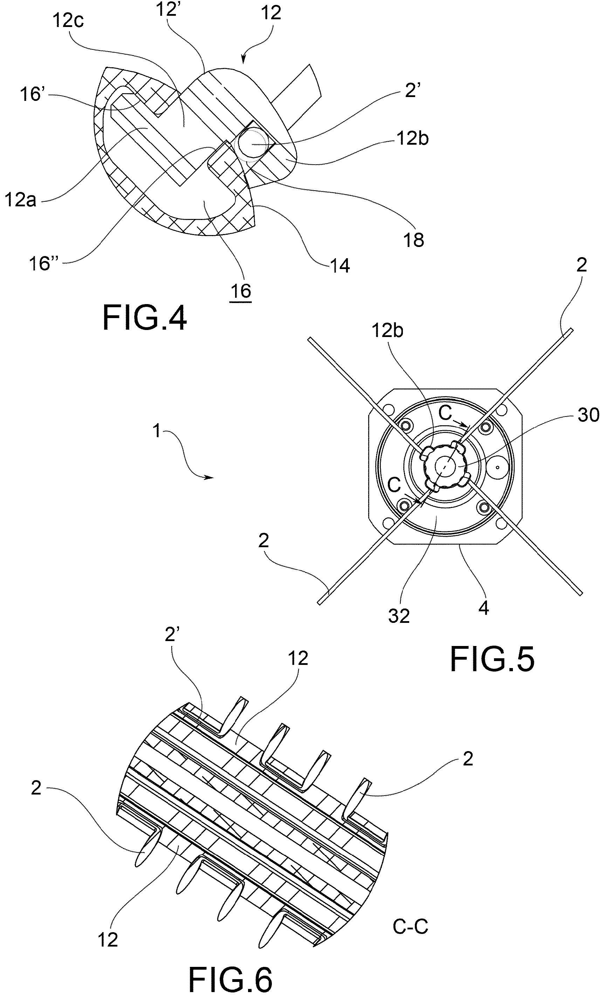

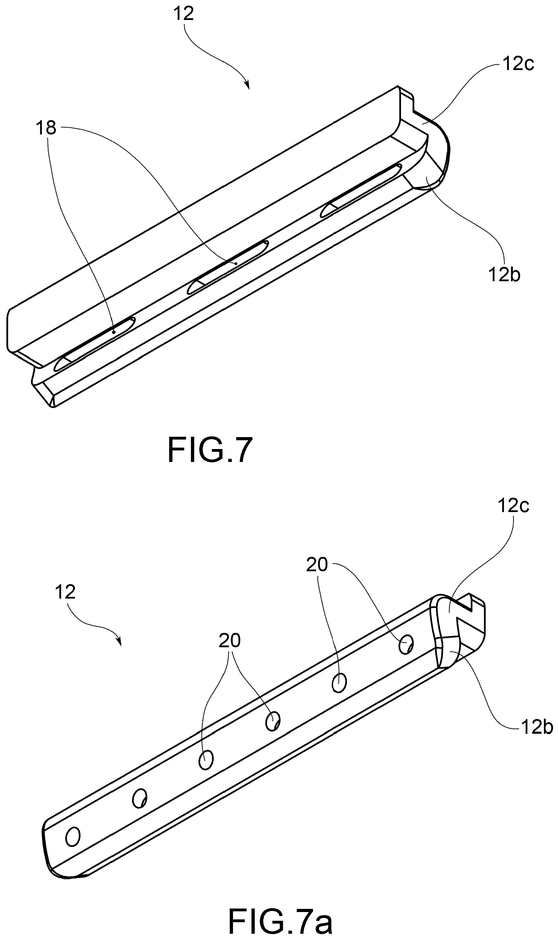

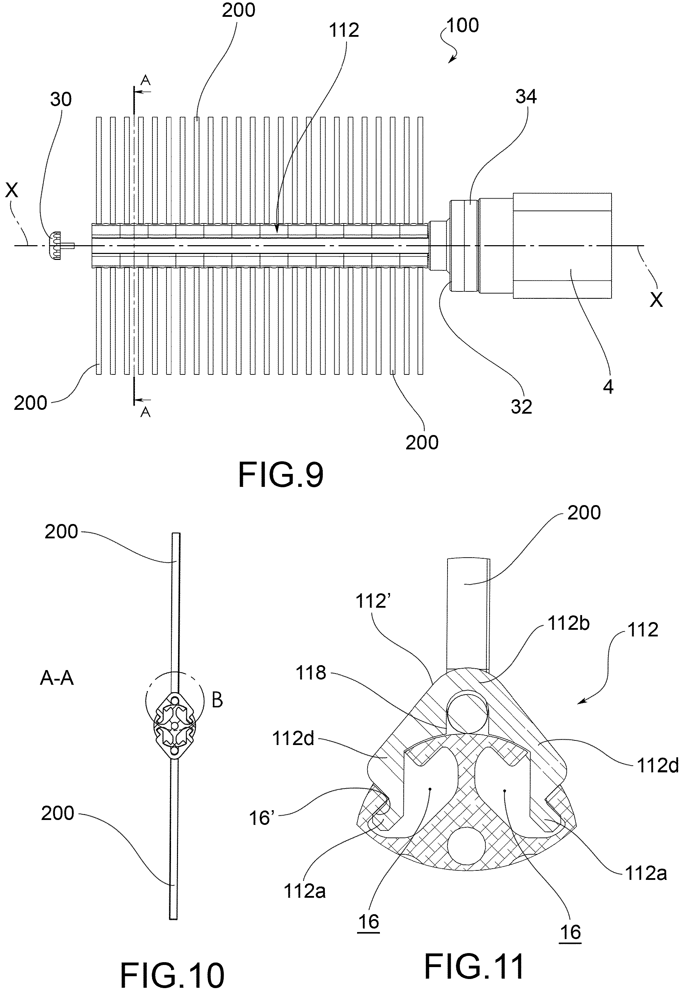

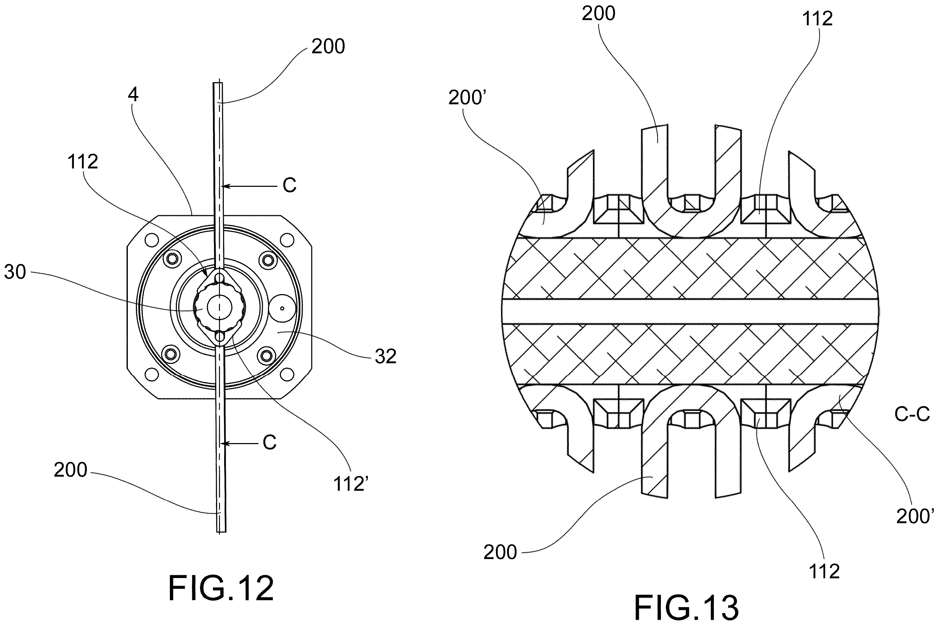

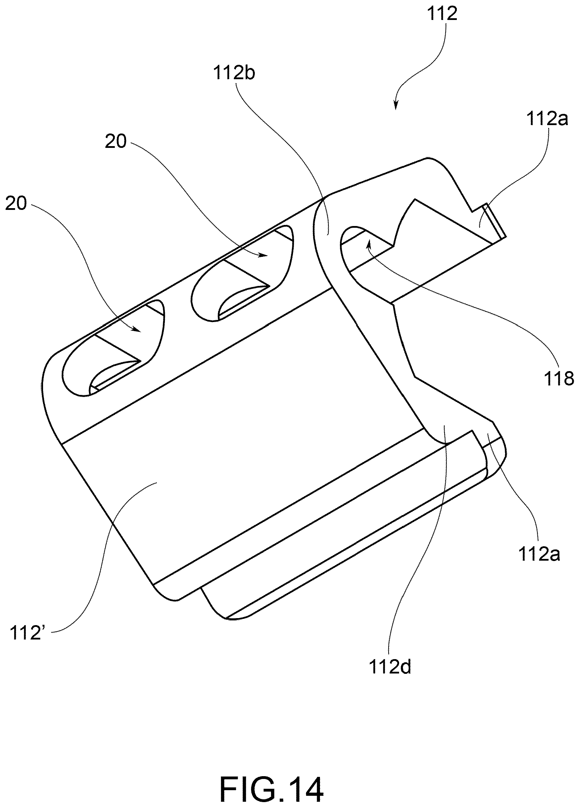

In an embodiment illustrated in Fig. 1-14, relating to the case of a filament tool 2; 200, at least one pair of longitudinally spaced holes 20 is formed in the tool connecting portion 12b; 112b; 1012b. Each pair of holes 20 is suitable to heddle a respective filament tool 2; 200.

Heddling a filament tool 2; 200 in a pair of adjacent holes 20 means that the filament enters a hole 20, makes a "U"-shaped curve, and exits the adjacent hole.

There can be single or multiple filaments heddled in the same restraint device 12; 112.

Single heddling means that a filament enters and exits through only two adjacent holes; multiple heddling means that a filament enters and exits through four adjacent holes.

In some preferred embodiments, the filaments 2; 200 are removably heddled into respective holes 20. Therefore, the filaments can be easily slipped out of the retaining device 12; 112 by pulling them at one end.

In the embodiment of Fig. 1-7, each retaining device 12 has an elongated shape and is crossed by a plurality of longitudinally aligned holes so as to connect a plurality of filament tools 2.

In the example in Fig. 1-7, four longitudinal grooves 16 are formed in the shaft 10, in each of which a respective retaining device 12 is partially housed.

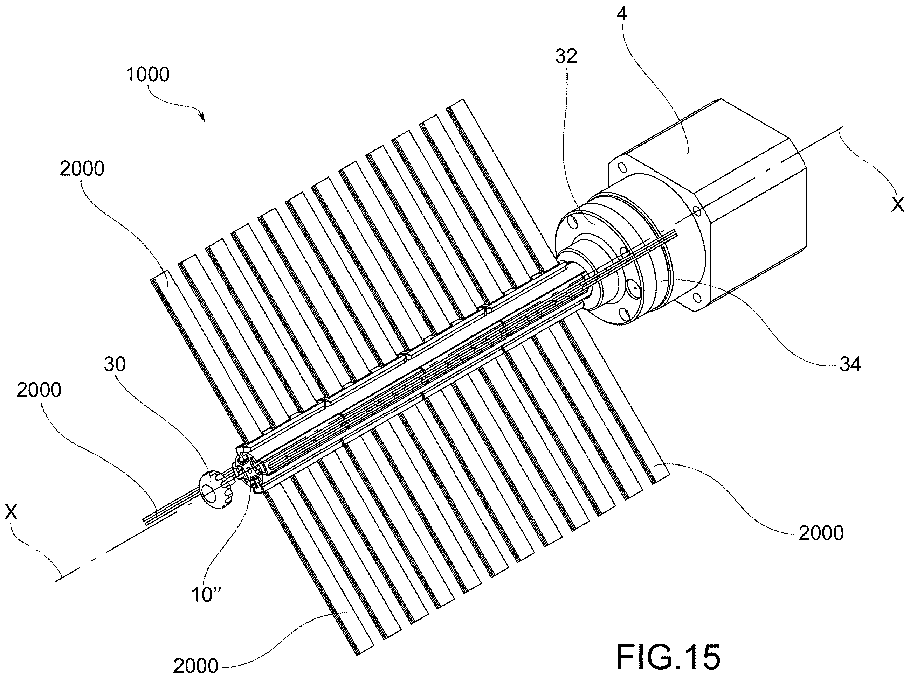

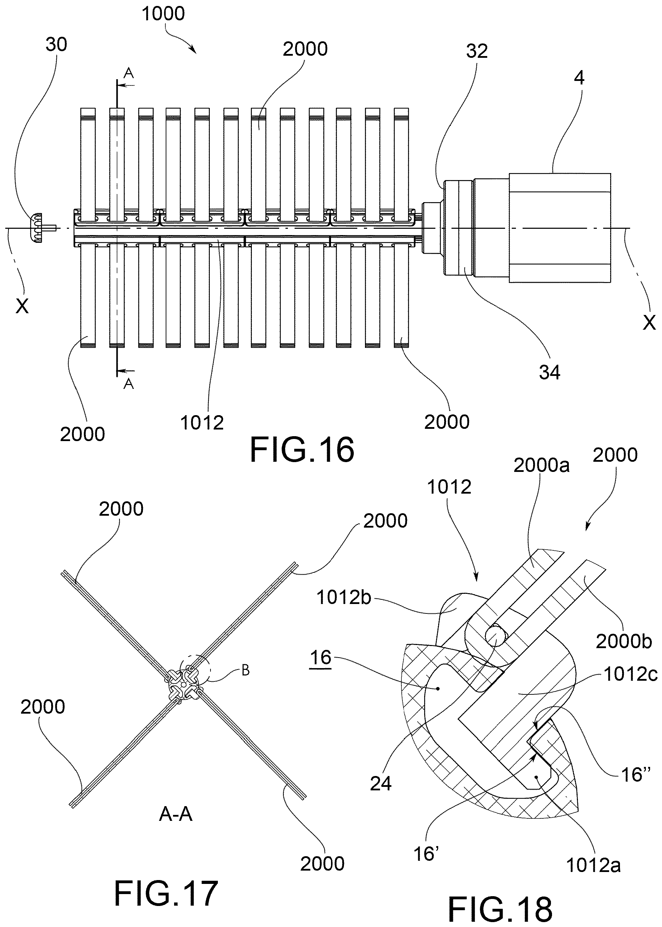

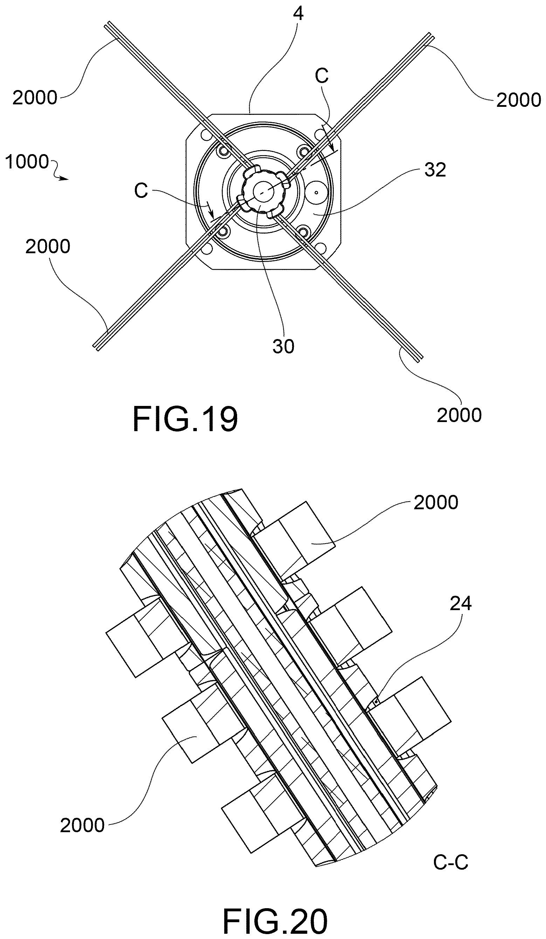

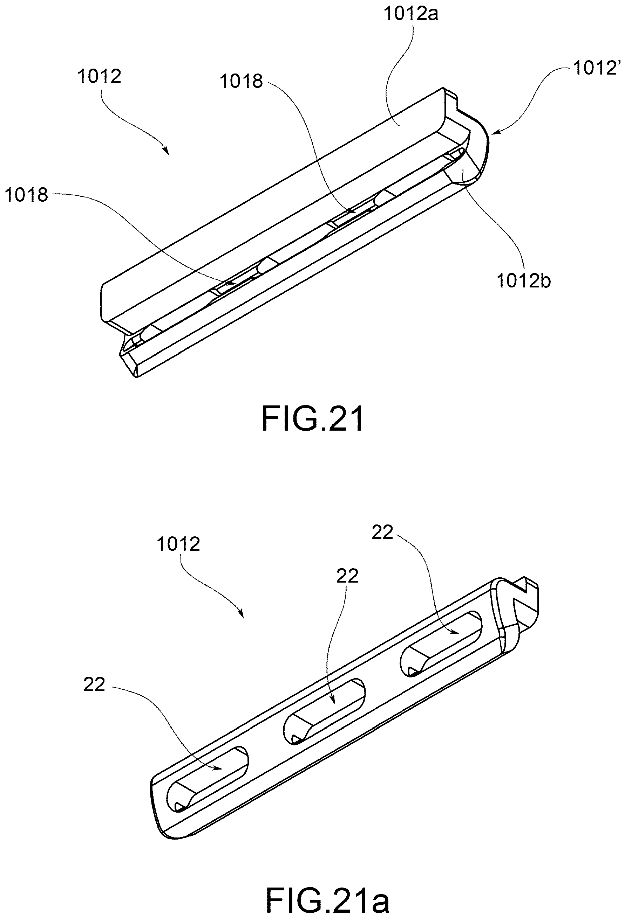

In the embodiment of the tool retaining device 1012 in Fig. 15-21, relating to a shaft provided with whip tools 2000, at least one through slot 22 suitable to be crossed by two ribbon-shaped portions 2000a, 2000b forming a whip tool 2000 is formed in the tool connecting portion 1012b.

In the embodiment of Fig. 15-21, each retaining device 1012 has an elongated shape and is crossed by a plurality of longitudinally aligned through slots 22 so as to connect a plurality of whip tools 2000.

In the illustrated example, four longitudinal grooves 16 are formed in the shaft 10, in each of which a respective retaining device 1012 for whip tools 2000 is partially housed.

In this embodiment with a through slot 22, the retaining device 1012 further comprises locking means 24 suitable to retain the proximal "U"-shaped portion of the whip tool 2000 in the tool housing 1018.

For example, the locking means 24 are constituted of a pin supported by the tool connecting portion 1012b and extending into the tool housing 1018 between the longitudinal ends of the through slot 22.

In the embodiments illustrated in Fig. 1-7 and 15-21, the device body 12'; 1012' comprises an intermediate portion 12c; 1012c that crosses the opening 16" of a respective longitudinal groove 16 formed in the shaft side wall 14 with positive and/or force coupling. The shaft connecting portion 12a; 1012a extends laterally from the intermediate portion 12c; 1012c so as to be engaged by the undercut 16' formed in the longitudinal groove 16. The tool connecting portion 12b; 1012b extends laterally from the intermediate portion 12c; 1012c, in an opposite direction from the shaft connecting portion 12a; 1012a. In other words, the retaining device 12; 1012 has a "Z" shape that helps to increase the constraint of each retaining device 12; 1012 to its longitudinal groove during shaft rotation and during the weeding action of the tool.

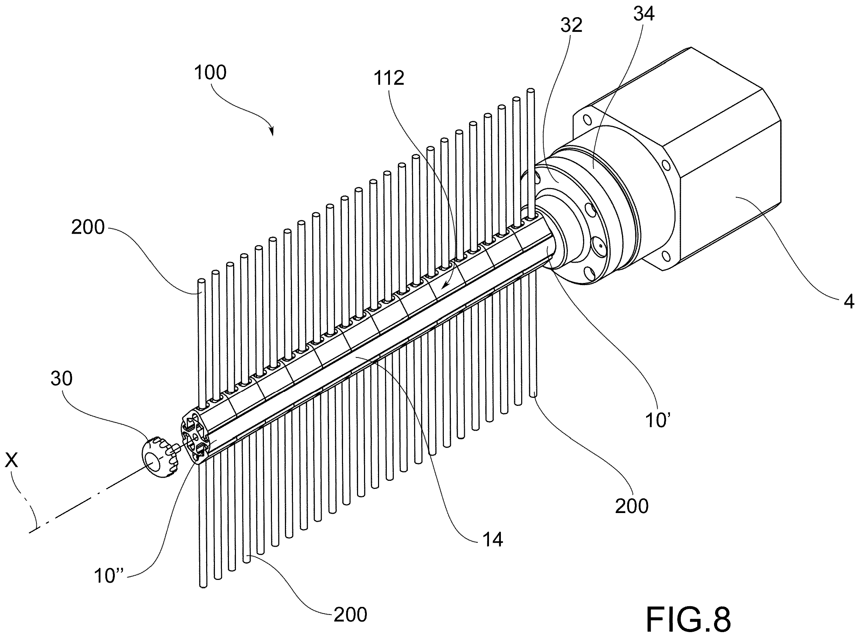

In the embodiment shown in Fig. 8-14, two pairs of longitudinal grooves 16 are obtained in the shaft 10. The grooves of each pair are angularly spaced apart according to an angle of less than 180°.

The retaining device 112 is suitable to retain filament tools 200, for example of larger diameter than filament tools 2 connected to the retaining device 12 of Fig. 1-7.

The device body 112' has two arms 112d that each terminate with a shaft connecting portion 112a inserted into a respective longitudinal groove 16 of a pair of longitudinal grooves 16. The arms 112d are joined together above the portion of the shaft side surface 14 that separates the two longitudinal grooves 16 to form the tool connecting portion 112b.

In other words, in this embodiment, each retaining device 112 engages two longitudinal grooves 16. For example, the retaining device 112 has a substantially triangular shape.

In the example of Fig. 8-14, the retaining device 112 has a longitudinal extension such that it is crossed by a single pair of holes 20. For each pair of longitudinal grooves 16, the shaft 10 is provided with a row of multiple retaining devices 112.

In some embodiments, the retaining devices 12; 112; 1012 are insertable into their respective grooves 16 through one end of the shaft 10.

As mentioned above, the undercut 16' prevents the retaining devices from being radially ejected from the respective groove 16, such as during rotation of the shaft 10. The use of a groove 16 with an undercut 16' allows radial locking of the retaining devices without the use of separate locking means, such as screws.

However, in some embodiments, longitudinal grooves without undercuts may be provided, such as rectangular cross sections, and screws or other locking means can be employed to secure the retaining devices 12; 112; 1012 to the respective grooves.

In some embodiments, the retaining devices 12; 112; 1012 have a longitudinal extension substantially corresponding to that of the shaft 10.

In other embodiments, the retaining devices 12; 112; 1012 have a longitudinal extension corresponding to a submultiple of the length of the shaft, whereby two or more devices can be inserted, longitudinally aligned, into the same longitudinal groove 16.

As mentioned above, in some embodiments, the tool housing 18; 118; 1018 is sized whereby the bent proximal tool portion in the tool housing is retained with calibrated interference between the tool connecting portion 12b; 112b; 1012b and the shaft side wall 14.

Calibrated interference here means that the friction between the proximal tool portion and the shaft side wall 14 prevents the filament from being ejected from the retaining device due to centrifugal force during shaft rotation 10, but at the same time is not so high as to prevent, if necessary, manual extraction of the filament without having to pull the retaining device out of the respective groove 16.

In one embodiment, a cap 30 is applied to the distal end 10" of the shaft 10 so as to axially lock the retaining devices 12; 112; 1012 partially housed in their respective longitudinal grooves 16.

In one embodiment, the tool 1 comprises an adapter flange 32 applied to the proximal end 10' of the shaft 10 and suitable to be coupled with a counter flange 34 of the drive member 4 of a weeding machine.

Note that the term "filament" comprises not only a single wire, but also multiple wires, or bunches, suitable for working the soil.

The tool 1 described above can be applied to most commercially available weeding machines via the adapter flange 32.

Once the tool 1 is rotated by the machine, due to centrifugal speed the filaments will be stretched and take the pre-set inclination; the result will be the desired mechanical weeding, suckering, or brushing action.

It is evident that the tool described above allows the intended objects to be achieved.

Since the tools (filaments, whips, etc.) are completely external to the longitudinal grooves, their shapes and sizes are completely divorced from the sizes and shapes of the grooves. For example, filaments with a much larger cross-sectional area than the width of the grooves can be installed on the shaft. Filament or whip geometries can also be used that are not compatible with the cross section of the groove.

The tool retaining device, by passing through the side opening, preferably with positive coupling and/or force coupling, prevents dirt or other external agents from infiltrating the groove.

The tool retaining device, by protruding outside the groove, offers, depending on the material with which it may be made (e.g., elastomer), protection to the bark of the plant trunk in case of accidental collision.

The tool retaining device that protrudes radially and laterally from the groove provides protection to said groove in case of accidental and frequent collision with the ground. In particular, the portion protruding from the groove prevents the shaft from being damaged in case of collision with the ground or other rigid bodies, also avoiding crushing or deformation of the groove that would make it more difficult, if not impossible, to extract the retaining device from the groove.

Due to the choice to retain the tools externally to the grooves, it is also possible to have a single groove with several tools distributed not only longitudinally, but also according to other arrangement geometries, for example along the circumference or along a spiral.

## Claims

1. A tool for mechanical weeding, suckering, or brushing (1) the soil under plants, comprising:
- a shaft (10) suitable to be put into rotation around its shaft axis (X) by a suckering machine, the shaft (10) defining a side shaft surface (14), at least one longitudinal groove (16) being obtained in the shaft (10),
- at least one retaining device (12; 112; 1012) partially and removably inserted in the at least one longitudinal groove (16) and suitable to retain at least one tool (2; 200; 2000) so that the tool (2; 200; 2000) protrudes radially from the shaft side surface (14) to be fed in rotation by the rotation of the shaft (10),
wherein each retaining device (12; 112; 1012) has a device body (12'; 112'; 1012') which forms:
- at least one shaft connecting portion (12a; 112a; 1012a) removably blocked within the at least one longitudinal groove (16),
- a tool connecting portion (12b; 112b; 1012b),
**characterized in that** the tool connecting portion (12b; 112b; 1012b) extends externally to the at least one longitudinal groove (16) and partially overlaps the shaft side surface (14), each tool (2; 200; 2000) being retained between the tool connecting portion (12b; 112b; 1012b) and the shaft side surface (14).

2. A tool (1) according to claim 1, wherein the tool connecting portion (12b; 112b; 1012b) forms at least one tool housing (18; 118; 1018) suitable to receive a "U"-shaped portion of the tool (2; 200; 2000).

3. A tool (1) according to claim 2, wherein the tool housing (18; 118; 1018) is configured so that the "U"-shaped portion (2'; 200'; 2000') of the tool (2; 200; 2000) is retained by positive coupling and/or force coupling between the tool connecting portion (12b; 112b; 1012b) and the shaft side surface (14).

4. A tool (1) according to any one of the preceding claims, wherein the shaft connecting portion (12a; 112a; 1012a) and the tool connecting portion (12b; 112b; 1012b) extend longitudinally over the entire length of the respective retaining device.

5. A tool (1) according to any one of the preceding claims, wherein the shaft connecting portion (12a; 112a; 1012a) and the tool connecting portion (12b; 112b; 1012b) are obtained in one piece with the device body (12'; 112'; 1012').

6. A tool (1) according to any one of the preceding claims, wherein each longitudinal groove (16) forms at least one undercut (16'), and wherein the connecting shaft portion (12a; 112a; 1012a) is engaged by said undercut (16').

7. A tool (1) according to any one of the preceding claims, wherein at least one pair of longitudinally spaced holes (20) is obtained in the tool connecting portion (12b; 112b; 1012b), each pair of holes (20) being suitable to heddle a filament tool (2; 200).

8. A tool (1) according to any one of the claims 1-6, wherein at least one through slot (22) suitable to be crossed by two ribbon-shaped portions (2000a, 2000b) forming a whip-like tool (2000) is obtained in the tool connecting portion (1012b), the retaining device (1012) further comprising locking means (24) suitable to retain the "U"-shaped portion of the whip-like tool (2000) in the tool housing (1018).

9. A tool (1) according to claim 8, wherein said locking means (24) are constituted of a pin supported by the tool connecting portion (1012b) and extending into the tool housing (1018) between the longitudinal ends of the through slot (22).

10. A tool (1) according to any one of the preceding claims 6-9, wherein the device body (12'; 1012') comprises an intermediate portion (12c; 1012c) which crosses with positive and/or force coupling the opening (16'') of a respective longitudinal groove (16) obtained in the shaft side wall (14).

11. A tool (1) according to claim 10, wherein the shaft connecting portion (12a; 1012a) extends laterally from said intermediate portion (12c; 1012c) to be engaged by the undercut (16') obtained in the longitudinal groove (16), and wherein the tool connecting portion (12b; 1012b) extends laterally from said intermediate portion (12c; 1012c), in the direction opposite to the connecting portion.

12. A tool (1) according to claim 7, wherein at least two longitudinal grooves (16) spaced at an angular distance from each other by an angle of less than 180° are obtained in the shaft (10), the body of the device (112') having two arms (112d) each ending with a shaft connecting portion (112a) inserted in a respective longitudinal groove (16) of said two longitudinal grooves (16), said arms (112d) mutually joining above the shaft side surface portion (14) which separates the two longitudinal grooves (16) so as to form the tool connecting portion (112b).

13. A tool (1) according to any one of the preceding claims, comprising a plurality of tools (2; 200; 2000) in the form of wires or whips removably retained between the tool connecting portion (12b; 112b; 1012b) of at least one retaining device (12; 112; 1012) and the shaft side surface (14).

## Patentansprüche

1. Werkzeug zum mechanischen Jäten, Saugen bzw. Austriebe-Entfernen oder Bürsten bzw. Pflügen (1) des Bodens unter Pflanzen, umfassend:
- eine Welle (10), die geeignet ist, durch eine Saug- bzw. Austriebe-Entfernungsmaschine in Rotation um ihre Wellenachse (X) versetzt zu werden, wobei die Welle (10) eine Seitenwellenfläche bzw. -oberfläche (14) definiert, wobei zumindest eine Längsnut (16) in der Welle (10) erhalten bzw. ausgebildet ist,
- zumindest eine Haltevorrichtung (12; 112; 1012), die teilweise und entfernbar in die zumindest eine Längsnut (16) eingesetzt ist und geeignet ist, zumindest ein Werkzeug (2; 200; 2000) so zu halten, dass das Werkzeug (2; 200; 2000) radial von der Wellenseitenfläche (14) vorsteht, um durch die Rotation der Welle (10) in Rotation versetzt zu werden,
wobei jede Haltevorrichtung (12; 112; 1012) einen Vorrichtungskörper (12'; 112'; 1012') aufweist, der bildet:
- zumindest einen Wellenverbindungsabschnitt (12a; 112a; 1012a), der entfernbar innerhalb der zumindest einen Längsnut (16) blockiert ist,
- einen Werkzeugverbindungsabschnitt (12b; 112b; 1012b),
**dadurch gekennzeichnet, dass** der Werkzeugverbindungsabschnitt (12b; 112b; 1012b) sich extern zu der zumindest einen Längsnut (16) erstreckt und die Wellenseitenfläche (14) teilweise überlappt, wobei jedes Werkzeug (2; 200; 2000) zwischen dem Werkzeugverbindungsabschnitt (12b; 112b; 1012b) und der Wellenseitenfläche (14) gehalten ist.

2. Werkzeug (1) nach Anspruch 1, wobei der Werkzeugverbindungsabschnitt (12b; 112b; 1012b)zumindest ein Werkzeuggehäuse (18; 118; 1018) bildet, das geeignet ist, einen "U"-förmigen Abschnitt des Werkzeugs (2; 200; 2000) aufzunehmen.

3. Werkzeug (1) nach Anspruch 2, wobei das Werkzeuggehäuse (18; 118; 1018) so konfiguriert ist, dass der "U"-förmige Abschnitt (2'; 200'; 2000') des Werkzeugs (2; 200; 2000) durch positive Kopplung bzw. Formschluss und/oder Kraftkopplung bzw. Kraftschluss zwischen dem Werkzeugverbindungsabschnitt (12b; 112b; 1012b) und der Wellenseitenfläche (14) gehalten ist.

4. Werkzeug (1) nach einem der vorhergehenden Ansprüche, wobei sich der Wellenverbindungsabschnitt (12a; 112a; 1012a) und der Werkzeugverbindungsabschnitt (12b; 112b; 1012b) längs über die gesamte Länge der jeweiligen Haltevorrichtung erstrecken.

5. Werkzeug (1) nach einem der vorhergehenden Ansprüche, wobei der Wellenverbindungsabschnitt (12a; 112a; 1012a) und der Werkzeugverbindungsabschnitt (12b; 112b; 1012b) einstückig mit dem Vorrichtungskörper (12'; 112'; 1012') erhalten bzw. ausgebildet sind.

6. Werkzeug (1) nach einem der vorhergehenden Ansprüche, wobei jede Längsnut (16) zumindest eine Hinterschneidung (16') bildet und wobei der Verbindungswellenabschnitt (12a; 112a; 1012a) durch die Hinterschneidung (16') in Eingriff genommen ist bzw. wird.

7. Werkzeug (1) nach einem der vorhergehenden Ansprüche, wobei zumindest ein Paar längs beabstandeter Löcher (20) in dem Werkzeugverbindungsabschnitt (12b; 112b; 1012b) enthalten bzw. ausgebildet ist, wobei jedes Paar Löcher (20) zum Aufnehmen eines Filamentwerkzeugs (2; 200) geeignet ist.

8. Werkzeug (1) nach einem der Ansprüche 1-6, wobei in dem Werkzeugverbindungsabschnitt (1012b) zumindest ein Durchgangsschlitz (22) enthalten bzw. ausgebildet ist, der geeignet ist, von zwei bandförmigen Abschnitten (2000a, 2000b) durchquert zu werden, die ein peitschenartiges Werkzeug (2000) bilden, wobei die Haltevorrichtung (1012) ferner Verriegelungsmittel (24) umfasst, die geeignet sind, den "U"-förmigen Abschnitt des peitschenartigen Werkzeugs (2000) in dem Werkzeuggehäuse (1018) zu halten.

9. Werkzeug (1) nach Anspruch 8, wobei die Verriegelungsmittel (24) aus einem Stift bestehen, der durch den Werkzeugverbindungsabschnitt (1012b) gestützt bzw. getragen ist und sich in das Werkzeuggehäuse (1018) zwischen den Längsenden des Durchgangsschlitzes (22) hineinerstreckt.

10. Werkzeug (1) nach einem der vorhergehenden Ansprüche 6-9, wobei der Vorrichtungskörper (12'; 1012') einen Zwischenabschnitt (12c; 1012c) umfasst, der mit positiver Kopplung bzw. Formschluss und/oder Kraftkopplung bzw. Kraftschluss die Öffnung (16") einer jeweiligen Längsnut (16) kreuzt, die in der Wellenseitenwand (14) enthalten bzw. ausgebildet ist.

11. Werkzeug (1) nach Anspruch 10, wobei sich der Wellenverbindungsabschnitt (12a; 1012a) lateral von dem Zwischenabschnitt (12c; 1012c) erstreckt, um durch die Hinterschneidung (16') in Eingriff genommen zu sein bzw. zu werden, die in der Längsnut (16) erhalten bzw. ausgebildet ist, und wobei sich der Werkzeugverbindungsabschnitt (12b; 1012b) lateral von dem Zwischenabschnitt (12c; 1012c) in der dem Verbindungsabschnitt entgegengesetzten Richtung erstreckt.

12. Werkzeug (1) nach Anspruch 7, wobei zumindest zwei Längsnuten (16), die in einem Winkelabstand voneinander um einen Winkel von weniger als 180° beabstandet sind, in der Welle (10) erhalten bzw. ausgebildet sind, wobei der Körper der Vorrichtung (112') zwei Arme (112d) aufweist, die jeweils mit einem Wellenverbindungsabschnitt (112a) enden, der in eine jeweilige Längsnut (16) der beiden Längsnuten (16) eingesetzt ist, wobei die Arme (112d) oberhalb des Wellenseitenflächenabschnitts (14), der die beiden Längsnuten (16) trennt, miteinander verbunden sind, um den Werkzeugverbindungsabschnitt (112b) zu bilden.

13. Werkzeug (1) nach einem der vorhergehenden Ansprüche, umfassend eine Mehrzahl von Werkzeugen (2; 200; 2000) in der Form von Drähten oder Peitschen, die entfernbar zwischen dem Werkzeugverbindungsabschnitt (12b; 112b; 1012b) von zumindest einer Haltevorrichtung (12; 112; 1012) und der Wellenseitenfläche (14) gehalten sind.

## Revendications

1. Outil (1) de désherbage mécanique, de suppression de drageons ou de brossage du sol sous des plantes, comprenant :
- un arbre (10) approprié pour être mis en rotation autour de son axe d'arbre (X) par une machine de suppression de drageons, l'arbre (10) définissant une surface latérale d'arbre (14), au moins une rainure longitudinale (16) étant obtenue dans l'arbre (10),
- au moins un dispositif de retenue (12 ; 112 ; 1012) inséré partiellement et de manière amovible dans la rainure longitudinale (16), au moins au nombre de une, et approprié pour maintenir au moins un outil (2 ; 200 ; 2000) de façon à ce que l'outil (2 ; 200 ; 2000) fasse saillie radialement depuis la surface latérale d'arbre (14) pour que la rotation de l'arbre (10) le fasse tourner,
dans lequel chaque dispositif de retenue (12 ; 112 ; 1012) a un corps de dispositif (12' ; 112' ; 1012') qui forme :
- au moins une partie de raccordement d'arbre (12a ; 112a ; 1012a) bloquée de manière amovible dans la rainure longitudinale (16), au moins au nombre de une,
- une partie de raccordement d'outil (12b ; 112b ; 1012b),
**caractérisé en ce que** la partie de raccordement d'outil (12b ; 112b ; 1012b) s'étend de manière externe vers la rainure longitudinale (16), au moins au nombre de une, et chevauche partiellement la surface latérale d'arbre (14), chaque outil (2 ; 200 ; 2000) étant maintenu entre la partie de raccordement d'outil (12b ; 112b ; 1012b) et la surface latérale d'arbre (14).

2. Outil (1) selon la revendication 1, dans lequel la partie de raccordement d'outil (12b ; 112b ; 1012b) forme au moins un logement d'outil (18 ; 118 ; 1018) approprié pour recevoir une partie en forme de « U » de l'outil (2 ; 200 ; 2000).

3. Outil (1) selon la revendication 2, dans lequel le logement d'outil (18 ; 118 ; 1018) est configuré de façon à ce que la partie en forme de « U » (2' ; 200' ; 2000') de l'outil (2 ; 200 ; 2000) soit retenue par un accouplement positif et/ou un accouplement par force entre la partie de raccordement d'outil (12b ; 112b ; 1012b) et la surface latérale d'arbre (14).

4. Outil (1) selon l'une quelconque des revendications précédentes, dans lequel la partie de raccordement d'arbre (12a ; 112a ; 1012a) et la partie de raccordement d'outil (12b ; 112b ; 1012b) s'étendent longitudinalement sur toute la longueur du dispositif de retenue respectif.

5. Outil (1) selon l'une quelconque des revendications précédentes, dans lequel la partie de raccordement d'arbre (12a ; 112a ; 1012a) et la partie de raccordement d'outil (12b ; 112b ; 1012b) sont obtenues d'une seule pièce avec le corps de dispositif (12' ; 112' ; 1012').

6. Outil (1) selon l'une quelconque des revendications précédentes, dans lequel chaque rainure longitudinale (16) forme au moins une entaille (16'), et dans lequel la partie de raccordement d'arbre (12a ; 112a; 1012a) est mise en prise par ladite entaille (16').

7. Outil (1) selon l'une quelconque des revendications précédentes, dans lequel au moins une paire de trous (20) espacés longitudinalement est obtenue dans la partie de raccordement d'outil (12b ; 112b ; 1012b), chaque paire de trous (20) étant appropriée pour rentrer un outil à filament (2 ; 200).

8. Outil (1) selon l'une quelconque des revendications 1 à 6, dans lequel au moins une fente traversante (22) appropriée pour être traversée par deux parties en forme de ruban (2000a, 2000b) formant un outil de type fouet (2000) est obtenue dans la partie de raccordement d'outil (1012b), le dispositif de retenue (1012) comprenant en outre des moyens de verrouillage (24) appropriés pour retenir la partie en forme de « U » de l'outil de type fouet (2000) dans le logement d'outil (1018).

9. Outil (1) selon la revendication 8, dans lequel lesdits moyens de verrouillage (24) sont constitués d'une broche supportée par la partie de raccordement d'outil (1012b) et s'étendant dans le logement d'outil (1018) entre les extrémités longitudinales de la fente traversante (22).

10. Outil (1) selon l'une quelconque des revendications précédentes 6 à 9, dans lequel le corps de dispositif (12' ; 1012') comprend une partie intermédiaire (12c ; 1012c) qui traverse, avec accouplement positif et/ou par force, l'ouverture (16'') d'une rainure longitudinale (16) respective obtenue dans la surface latérale d'arbre (14).

11. Outil (1) selon la revendication 10, dans lequel la partie de raccordement d'arbre (12a ; 1012a) s'étend latéralement depuis ladite partie intermédiaire (12c ; 1012c) pour être engagée par l'entaille (16') obtenue dans la rainure longitudinale (16), et dans lequel la partie de raccordement d'outil (12b ; 1012b) s'étend latéralement depuis ladite partie intermédiaire (12c ; 1012c), dans la direction opposée à la partie de raccordement.

12. Outil (1) selon la revendication 7, dans lequel au moins deux rainures longitudinales (16) espacées selon une distance angulaire l'une de l'autre, d'un angle inférieur à 180°, sont obtenues dans l'arbre (10), le corps du dispositif (112') ayant deux bras (112d) se terminant chacun par une partie de raccordement d'arbre (112a) insérée dans une rainure longitudinale (16) respective desdites deux rainures longitudinales (16), lesdits bras (112d) se rejoignant mutuellement au-dessus de la partie de surface latérale d'arbre (14) qui sépare les deux rainures longitudinales (16) de manière à former la partie de raccordement d'outil (112b).

13. Outil (1) selon l'une quelconque des revendications précédentes, comprenant une pluralité d'outils (2 ; 200 ; 2000) sous la forme de fils ou de fouets retenus de manière amovible entre la partie de raccordement d'outil (12b ; 112b ; 1012b) d'au moins un dispositif de retenue (12 ; 112 ; 1012) et la surface latérale d'arbre (14).
